# EUROPÄISCHE PATENTSCHRIFT

(11) **EP 1 619 174 B1**
(45) Veröffentlichungstag und Bekanntmachung des Hinweises auf die Patenterteilung: **23.05.2018**
(21) Anmeldenummer: 05106748.6
(22) Anmeldetag: 22.07.2005
(51) Int. Cl.: C04B 26/06, C04B 26/10, C04B 40/06, E21D 20/02

(54) **ZWEIKOMPONENTEN-MÖRTELMASSE UND IHRE VERWENDUNG**
TWO COMPONENT MORTAR AND ITS USE
MORTIER À DEUX COMPOSANTS ET SON UTILISATION

(30) Priorität: 22.07.2004 DE 102004035567
(43) Veröffentlichungstag der Anmeldung: 25.01.2006
(73) Patentinhaber: HILTI Aktiengesellschaft, 9494 Schaan (LI)
(72) Erfinder: Bürgel, Thomas, 86899, Landsberg am Lech (DE); Hettich, Rainer, 81371, München (DE); Pfeil, Armin, 86916, Kaufering (DE)
(74) Vertreter: Hilti Aktiengesellschaft Corporate Intellectual Property

(56) Entgegenhaltungen:
- EP-A- 0 508 183
- EP-A- 0 534 197
- DE-A1- 19 531 649

## Beschreibung

Die vorliegende Erfindung betrifft eine Zweikomponenten-Mörtelmasse mit einer härtbaren Harzkomponente enthaltend mindestens ein radikalisch polymerisierbares Harz, Füllstoffe, Lösungsmittel und Beschleuniger, sowie einer davon reaktionsinhibierend getrennt angeordneten Härterkomponente sowie ihre Verwendung zur Befestigung von Verankerungsmitteln in Bohrlöchern in mineralischen Untergründen durch chemische Reaktion der Komponenten.

Chemische Mörtelmassen und Dübelmassen auf Basis von radikalisch härtenden Reaktionsharzen sind seit langem bekannt. Diese Reaktionsharze setzen sich in der Regel aus einer härtbaren Harzkomponente und einer Härterkomponente zusammen. Die härtbare Harzkomponente umfasst beispielsweise ein reaktives Polymer sowie ein zur Vernetzung fähiges Monomer, das auch Reaktivverdünner genannt wird, und dazu dient, die Viskosität der Mörtelmasse einzustellen und durch Reaktion bei der Aushärtung an der Verfestigung des Materials teilzunehmen, sowie Füllstoffe und übliche Zusätze.

So beschreibt die DE 32 26 602 A1 eine härtbare Zweikomponenten-Mörtelmasse, die ein ungesättigtes Polyesterharz, einen Reaktivverdünner, Füllstoffe, Thixotropiermittel und einen radikalischen Härtungskatalysator enthält. Als Reaktivverdünner wird dabei Monostyrol oder Divinylbenzol eingesetzt.

Gegenstand der DE 36 17 702 A1 ist ein härtbares Mittel zur Befestigung von Dübeln und Ankerstangen mit einem Gehalt an härtbarem Acrylat, welches neben einem organischen Peroxidhärter, einem Beschleuniger, einem Phlegmatisierungsmittel, mineralischen Füllstoffen und Thixotropiermittel einen Reaktivverdünner enthält. Als Reaktivverdünner wird dabei Monostyrol, Divinylbenzol, Allylester mehrbasischer Säuren, Methacrylsäuremethylester, Methacrylsäure-isopropylester und Methacrylsäure-isobutylester erwähnt.

Die DE 39 40 309 A1 beschreibt ebenfalls eine Mörtelmasse zur Befestigung von Verankerungsmitteln in festen Aufnahmewerkstoffen, mit einem Gehalt an radikalisch härtbaren Vinylesterurethanharzen und einem Reaktivverdünner als Wahlkomponente. Als Reaktivverdünner sind in dieser Druckschrift ebenfalls Monostyrol, Divinylbenzol, Acrylate und Methacrylate genannt.

Die DE 42 31 161 A1 offenbart ebenfalls einen Zweikomponenten-Mörtel zur Befestigung von Verankerungsmitteln in Bohrlöchern mit einem Gehalt an hydraulisch abbindenden und/oder polykondensierbaren Verbindungen als anorganische, härtbare Verbindungen und härtbaren Vinylestern als organische, härtbare Verbindungen. Als Reaktivverdünner werden nach der Lehre dieses Standes der Technik mono- und polyfunktionelle Acryl- und Methacrylsäureester genannt.

Schließlich wird in der DE 41 31 457 A1 eine Zweikomponenten-Mörtelmasse zur chemischen Befestigung von Ankerstangen, Dübeln und Schrauben in Bohrlöchern beschrieben, welche ein radikalisch härtbares Vinylester- oder Vinylurethanharz und räumlich getrennt davon ein Härtungsmittel für das Harz enthält sowie als Comonomer ein Acetacetoxyalkyl(meth)acrylat, welches dazu dient, eine gute Haftung an silikatischen Materialien zu erzielen.

Mit Hilfe der zuletzt erwähnten styrolfreien chemischen Befestigungssysteme ist es möglich geworden, durch die Auswahl der Reaktivverdünner die Reaktionsharze speziell auf bestimmte Untergründe zu optimieren. So hat es sich gezeigt, dass gut benetzende, polare, niedrigviskose Monomere, wie Hydroxyalkylmethacrylate dazu geeignet sind, eine gute Haftung an Untergründen aus Beton zu erreichen. Auf saugfähigen Untergründen, wie Ziegel, welche zudem nennenswerte Mengen an Eisenionen enthalten, welche die radikalische Härtung mit Diacylperoxiden, insbesondere dem bevorzugten Dibenzylperoxid stören, hat sich der Einsatz höherviskoser, weniger polarer Monomerer, wie Acetacetoxyalkyl(meth)acrylate, bewährt. Diese Monomere haben sich als dafür geeignet erwiesen, chemische Befestigungssysteme zu bilden, die für Vollziegeluntergründe und Hohlziegeluntergründe ausgelegt sind.

Obwohl es bekannt ist, dass es durch entsprechende Auswahl der Reaktivverdünner gelingt, die Zweikomponenten-Mörtelmasse an spezifische Untergründe anzupassen, hat sich andererseits gezeigt, dass diese Mörtelmassen auf anderen Untergründen erhebliche Schwächen zeigen und nicht die notwendige Haftfestigkeit ermöglichen. So wurde von den Erfindern gefunden, dass eine Zweikomponenten-Mörtelmasse, welche Hydroxyalkylmethacrylate, wie Hydroxyethylmethacrylat oder Hydroxypropylmethacrylat, als Reaktivverdünner enthalten, auf Ziegeln drastisch an Leistung einbüßen, weil diese Reaktivverdünner offenbar schnell in den saugenden Untergrund eindringen und damit nicht zu der gewünschten Haftung im Bereich der Verbundfläche führen.

Andererseits hat sich bei den Untersuchungen der Erfinder erwiesen, dass die aus der DE 41 31 457 A1 bekannten Zweikomponenten-Mörtelmassen, die Acetacetoxyalkyl(meth)acrylate als Reaktivverdünner enthalten, keine befriedigenden Haftungswerte zeigen, wenn sie statt auf Ziegeluntergründen in Beton eingesetzt werden. Auch hier ergibt sich offenbar eine gestörte Härtung im Bereich der Grenzschicht zwischen der Mörtelmasse und dem Untergrund.

Aus der DE 195 31 649 A1 ist eine Dübelmasse für die chemische Befestigung von Ankerstangen, Gewindehülsen und Schrauben in Bohrlöchern bekannt, die ein radikalisch härtbares Reaktionsharz, welches 0.0005 bis 2 Gew.-% eines Inhibitors enthält, und - räumlich getrennt davon angeordnet - ein Härtungsmittel für das Harz enthält. Zur Lösung der diesem Stand der Technik zugrunde liegenden Aufgabe, nämlich die Bereitstellung eines Inhibitors, der bei luftdichten Verpackungen und auch in Gegenwart von Licht eine ausreichend lange Lagerstabilität gewährleistet, enthält diese Dübelmasse als Inhibitor ein Piperidinyl-N-oxyl oder ein Tetrahydropyrrol-N-oxyl als Inhibitor.

Nach dem Anspruch 3 kann das radikalisch härtbare Reaktionsharz einen Methacrylsäureester als Comonomer enthalten. Als bevorzugte Comonomere sind neben einer Vielzahl weiterer Methacrylatverbindungen Acetacetoxyethylmethacrylat und Hydroxypropylmethacrylat aufgeführt.

Aus dem Stand der Technik ergibt sich also, dass Zweikomponenten-Mörtelmassen für die chemische Befestigungstechnik durch die ausgewählte Kombination von reaktivem Harz, Füllstoff und Hilfsmitteln ein Fließ-, Benetzungs- und Haftungsverhalten zeigen, welche nur für einen speziellen Untergrund optimiert sein können und auf anderen Untergründen eine wesentlich schlechtere Haftung ergeben. Demzufolge war davon auszugehen, dass es für die Herstellung einer Zweikomponenten-Mörtelmasse, welche auf allen üblichen mineralischen Untergründen ein ausgewogenes Leistungsbild zeigt, notwendig ist, Kompromisse einzugehen, die zur Folge haben, dass dieses Leistungsniveau deutlich niedriger liegt als das Leistungsniveau der Mörtelmassen, die speziell für den jeweiligen Untergrund optimiert worden sind.

Es war daher zu erwarten, dass wenn man die aus dem Stand der Technik bekannten Reaktivverdünner für die unterschiedlichen Befestigungsgründe kombiniert, man Mörtelmassen erhalten würde, welche auf keinem der genannten Untergründe eine zufriedenstellende Haftung sicherstellen. Andererseits würden Zweikomponenten-Mörtelmassen, welche solche Reaktivverdünner nicht enthalten, eine Haftwirkung erreichen, die gehobenen Anforderungen nicht gerecht würde und in keinem Fall an die Leistungen der Mörtelmassen heranreichen würde, die auf die jeweiligen Untergründe optimiert worden sind.

Die der vorliegenden Erfindung zugrunde liegende Aufgabe besteht nun darin, eine Zweikomponenten-Mörtelmasse der eingangs angegebenen Art bereitzustellen, die zur chemischen Befestigung von Verankerungsmitteln in Bohrlöchern unterschiedlichen mineralischen Untergrunds geeignet ist und sowohl auf Betonuntergründen als auch auf Ziegeluntergründen eine deutlich verbesserte Haftung zeigt.

Es hat sich nun überraschenderweise gezeigt, dass die der vorliegenden Erfindung zugrunde liegende Aufgabe dadurch gelöst werden kann, dass man in einer Zweikomponenten-Mörtelmasse der eingangs angegebenen Gattung 5 bis 35 Gew.-% einer Reaktiwerdünner-Mischung aus mindestens einem Hydroxyalkyl(meth)acrylat und mindestens einem Acetacetoxyalkyl(meth)acrylat in einem bestimmten Gewichtsverhältnis einsetzt.

Gegenstand der Erfindung ist daher die Zweikomponenten-Mörtelmasse gemäß Hauptanspruch. Die Unteransprüche betreffen bevorzugte Ausführungsformen dieses Erfindungsgegenstandes sowie die Verwendung dieser Zweikomponenten-Mörtelmasse zur chemischen Befestigung von Verankerungsmitteln, wie Ankerstangen, Dübeln und Schrauben, in Bohrlöchern unterschiedlichen mineralischen Untergrunds.

Gegenstand des Anspruchs 1 ist daher eine Zweikomponenten-Mörtelmasse mit einer härtbaren Harzkomponente enthaltend mindestens ein radikalisch polymerisierbares Harz, 5 bis 35 Gew.-% einer Reaktiwerdünner-Mischung aus mindestens einem Hydroxyalkyl(meth)acrylat und mindestens einem Acetacetoxyalkyl(meth)acrylat in einem Gewichtsverhältnis von 1,5:1 bis 5,2:1, Füllstoffe, Lösungsmittel und Beschleuniger sowie einer davon reaktionsinhibierend getrennt angeordneten Härterkomponente.

Es hat sich überraschenderweise gezeigt, dass die erfindungsgemäße Zweikomponenten-Mörtelmasse sowohl auf Betonuntergründen als auch auf Ziegeluntergründen eine Haftung zeigt, die deutlich besser ist als diejenige von Zweikomponenten-Mörtelmassen, die durch die Auswahl ihres Reaktivverdünners für den Einsatz in Beton, beziehungsweise für den Einsatz in Ziegel-Untergründen, optimiert worden sind. Hierzu darf auf die weiter unten angegebenen Beispiele und Vergleichsbeispiele verwiesen werden.

Vorzugsweise enthält die erfindungsgemäß eingesetzte Reaktiwerdünner-Mischung Hydroxyalkly(meth)acrylat und Acetacetoxyalkyl(meth)acrylat in einem Gewichtsverhältnis von 2:1 bis 3,5:1 und insbesondere von etwa 3:1.

Gemäß einer bevorzugten Ausführungsform ist die Reaktiwerdünner-Mischung in einer Menge von 10 bis 30 Gew.-% in der Harzkomponente enthalten.

Vorzugsweise enthält die Reaktiwerdünner-Mischung als Hydroxyalkyl(meth)acrylat mindestens einen Vertreter der Hyroxyethylmethacrylat und Hydroxypropylmethacrylat umfassenden Gruppe, während als bevorzugtes Acetacetoxyalkyl(meth)acrylat mindestens ein Vertreter der Acetacetoxyethyl-methacrylat und Acetoacetoxypropyl-methacrylat umfassenden Gruppe eingesetzt wird.

Die erfindungsgemäße Zweikomponenten-Mörtelmasse enthält als radikalisch polymerisierbares Harz vorzugsweise mindestens einen Vertreter der ungesättigte Polyesterharze, Vinylesterharze und Vinylesterurethanharze umfassenden Gruppe. Als Vinylesterurethanharze werden vorzugsweise Urethandimethacrylat-Polymere und als ungesättigte Polyesterharze ungesättigte Polyesterharze auf der Grundlage von o- und/oder iso-Phthalsäure, Maleinsäure oder Fumarsäure als Dicarbonsäure und niedrigmolekularen aliphatischen Polyolen, vorzugsweise Diolen eingesetzt.

Erfindungsgemäß ist es weiterhin möglich, zusätzlich einen monofunktionellen und/oder difunktionellen Reaktiwerdünner, wie Methylmethacrylat, Ethylmethacrylat, Polyethylenglycol-methacrylat, Butandioldimethacrylat, Ethylenglykoldimethacrylat, Diethylenglykoldimethacrylat und/oder Triethylenglykoldimethacrylat in die Harzkomponente einzubringen, um die Viskosität der Mörtelmasse weiter zu verbessern und gleichzeitig eine stärkere Vernetzung der Harzkomponenten zu bewirken.

Die beanspruchte Zweikomponenten-Mörtelmasse kann als Füllstoffe die üblichen Materialien wie Quarz, pyrogene Kieselsäure, Glas, Korund, Porzellan, Steingut, Schwerspat, Leichtspat, Talkum, Zement und/oder Kreide enthalten.

Als Beschleuniger für die Härtungsreaktion enthält die erfindungsgemäße Zweikomponenten-Mörtelmasse vorzugsweise ein aromatisches Amin, ein Toluidin oder ein Xylidin und/oder ein Salz von Cobalt, Mangan, Zinn oder Cer. Bevorzugte Beschleuniger sind N,N-Dimethylanilin, N,N-Diethylanilin, N,N-Diisopropyliden-p-toluidin, N,N-Dimethyl-p-toluidin, N,N-Diisopropylol-p-toluidin, N,N-Diethylol-p-toluidin, N-Bis(2-hydroxyethyl)-xylidin, Cobaltoctoat und/oder Cobaltnaphthenat.

Als Härter kann die erfindungsgemäße Zweikomponenten-Mörtelmasse Benzoylperoxid, Methylethylketonperoxid, tert.-Butylperbenzoat, Cyclohexanonperoxid, Lauroylperoxid, Cumolhydroperoxid und/oder tert.-Butylperoxy-2-ethylhexanoat enthalten. Dabei ist der Härter in der getrennt angeordneten Härterkomponente in einer Menge von 0,5 bis 10 Gew.-%, vorzugsweise 3 bis 8 Gew.-%, bezogen auf das radikalisch polymerisierbare Harz, vorhanden.

Die erfindungsgemäße Zweikomponenten-Mörtelmasse kann als weitere übliche Mörtelbestandteile Wasser als Phlegmatisierungsmittel in der Härterkomponente und/oder tert.-Butylbrenzcatechin und/oder 4-Hydroxy-2,2,6,6-tetramethylpiperidinyl-1-oxid (Tempol) als Polymerisationsinhibitor in der Harzkomponente enthalten.

Ein weiterer Gegenstand der Erfindung ist die Verwendung der oben beschriebenen Zweikomponenten-Mörtelmasse zur chemischen Befestigung von Verankerungsmitteln, wie Ankerstangen, Dübeln und Schrauben in Bohrlöchern unterschiedlichen mineralischen Untergrunds, also beispielsweise Untergründe auf der Grundlage von Beton, Porenbeton, Ziegelwerk, Kalksandstein, Sandstein, Naturstein und dergleichen.

Die erfindungsgemäße Zweikomponenten-Mörtelmasse umfasst die härtbare Harzkomponente und die Härterkomponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, die erfindungsgemäße Zweikomponenten-Mörtelmasse in Zweikomponenten-Kapseln einzubringen, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Die folgenden Beispiele dienen der weiteren Erläuterung der Erfindung.

### BEISPIEL 1

### Erfindungsgemäße Zweikomponenten-Mörtelmasse

Man bereitet zunächst eine Härterkomponente der folgenden Zusammensetzung, die im Übrigen auch bei den folgenden Beispielen 2 und 3 eingesetzt wird:

**Tabelle 1**

| **Bestandteil** | **Gew.-%** |
|---|---|
| Dibenzoylperoxid-Paste (Peroxidgehalt 75 Gew.-%) | 10,00 |
| Wasser | 30,00 |
| Quarzmehl mit einer mittleren Korngröße < 0,01 mm | 57,50 |
| Pyrogene Kieselsäure | 2,50 |
| **Gesamt** | **100,00** |

Man erhält die Härterkomponente durch homogenes Vermischen der in der obigen Tabelle angegebenen Bestandteile.

Die härtbare Harzkomponente bereitet man durch Vermischen der in der nachfolgenden Tabelle 2 angegebenen Bestandteile:

**Tabelle 2**

| **Bestandteil** | **Gew.-%** |
|---|---|
| Urethandimethacrylat-Polymer | 19,50 |
| Butandioldimethacrylat | 12.50 |
| Hydroxypropylmethacrylat | 9,00 |
| Acetoacetoxyethyl-methacrylat | 3,00 |
| p-Toluidin (Beschleuniger) | 1,25 |
| tert.-Butylbrenzcatechin (Polymerisationsinhibitor) | 0,25 |
| Quarzsand mit einer mittleren Korngröße von 0,4 mm | 23,00 |
| Quarzsand mit einer mittleren Korngröße von < 0,05 mm | 29,00 |
| pyrogene Kieselsäure | 2,50 |
| **Gesamt** | **100,00** |

Die obige erfindungsgemäße härtbare Harzkomponente enthält die Reaktivverdünner Hydroxypropylmethacrylat und Acetacetoxyethyl-methacrylat in einem Gewichtsverhältnis von 3:1.

Die härtbare Harzkomponente und die Härterkomponente werden reaktionsinhibierend getrennt in eine Zweikomponenten-Kartusche mit Statikmischer eingebracht und zwar in solchen Mengen, dass sich ein Volumen-Mischungsverhältnis von Harzkomponente zu Härter 3:1 ergibt.

### BEISPIEL 2 - VERGLEICHSBEISPIEL V1

Man bereitet eine härtbare Harzkomponente für eine für den Einsatz in Beton optimierte Zweikomponenten-Mörtelmasse durch Vermischen der in der nachfolgenden Tabelle 3 angegebenen Bestandteile:

**Tabelle 3**

| **Bestandteil** | **Gew.-%** |
|---|---|
| Urethandimethacrylat-Polymer | 13,00 |
| Butandioldimethacrylat | 13,00 |
| Hydroxypropylmethacrylat | 13,00 |
| p-Toluidin (Beschleuniger) | 0,95 |
| tert.-Butylbrenzcatechin (Polymerisationsinhibitor) | 0,25 |
| Quarzsand mit einer mittleren Korngröße von 0,4 mm | 20, 00 |
| Quarzsand mit einer mittleren Korngröße von < 0,05 mm | 37,50 |
| pyr ogene Kieselsä ure | 2,30 |
| **Gesamt** | **100,00** |

Diese härtbaren Harzkomponenten werden zusammen mit der in Beispiel 1 angegebenen Härterkomponente getrennt in einer Zweikomponenten-Kartusche mit Statikmischer eingebracht.

### BEISPIEL 3 - VERGLEICHSBEISPIEL V2

Durch Vermischen der in der nachfolgenden Tabelle 4 angegebenen Bestandteile bereitet man eine härtbare Harzkomponente für eine Zweikomponenten-Mörtelmasse, die für den Einsatz in Ziegel-Untergründen optimiert ist:

**Tabelle 4**

| **Bestandteil** | **Gew.-%** |
|---|---|
| Urethandimethacrylat-Polymer | 24,00 |
| Butandioldimethacrylat | 17,00 |
| Acetoacetoxyethyl-methacrylat | 5,50 |
| p-Toluidin (Beschleuniger) | 1,25 |
| tert.-Butylbrenzcatechin (Polymerisationsinhibitor) | 0,25 |
| Quarzsand mit einer mittleren Korngröße von 0,4 mm | 23,00 |
| Quarzsand mit einer mittleren Korngröße von < 0, 05 mm | 26,00 |
| pyrogene Kieselsäure | 3,00 |
| **Gesamt** | **100,00** |

Diese härtbaren Harzkomponenten werden zusammen mit der in Beispiel 1 angegebenen Härterkomponente getrennt in einer Zweikomponenten-Kartusche mit Statikmischer eingebracht.

### BEISPIEL 4

### Untersuchung der technischen Leistungsfähigkeit der Zweikomponenten-Mörtelmasse der Beispiele 1 bis 3

Man bohrt in Untergründe aus Beton (C20/25) beziehungsweise Vollziegel (MZ12) Löcher mit einem Innendurchmesser von 14 mm und einer Tiefe von 110 mm. Die Bohrlöcher werden trocken ausgeblasen und gebürstet.

Die in den Zweikomponenten-Kartuschen mit Statikmischer vorliegenden Zweikomponenten-Mörtelmassen der Beispiele 1 bis 3 werden durch den Statikmischer ausgepresst und dort vermischt und in die Bohrlöcher injiziert. Dann bringt man Ankerstangen M12 in die Bohrlöcher ein und lässt die Mörtelmassen während 24 Stunden bei Raumtemperatur aushärten.

Anschließend bestimmt man die Auszugskraft der befestigten Ankerstangen durch zentrisches Ausziehen mit enger Abstützung des hydraulisch betriebenen Ausziehgeräts und ermittelt die Versagenslast F, wobei man jeweils 5 Ankerstangen auszieht und einen Mittelwert der Versagenslast F in kN und die Streuung v in % bestimmt.

Die bei diesen Auszugsversuchen erhaltenen Ergebnisse sind in der nachfolgenden Tabelle 5 aufgeführt.

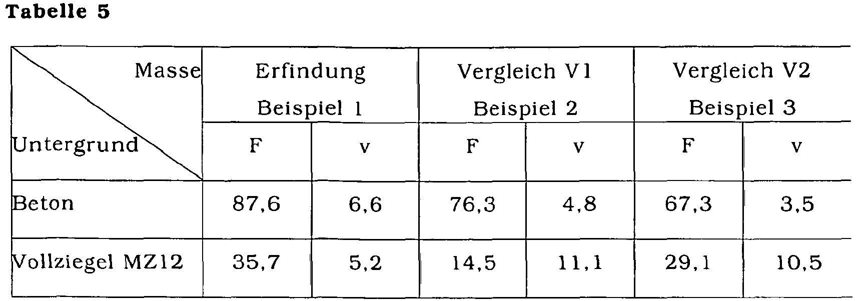

Aus der obigen Tabelle ist erkennbar, dass die erfindungsgemäße Zweikomponenten-Mörtelmasse sowohl in Beton als auch in Vollziegel eine höhere Auszugskraft zeigt als die auf die jeweiligen Untergründe optimierten Vergleichsmassen der Vergleichsbeispiele 2 und 3. Dieser Sachverhalt ist als überraschend anzusehen, weil aufgrund des bekannten Verhaltens der eingesetzten Reaktivverdünner zu erwarten war, dass sich im besten Falle Auszugskräfte erzielen lassen würden, die ebenso hoch sind wie die für die jeweiligen Untergründe optimierten Mörtelmassen. Da mit der erfindungsgemäßen härtbaren Mörtelmasse eine gesteigerte Haftung an den beiden verglichenen unterschiedlichen Untergründen erzielt wird, muss dies als unerwarteter synergistischer Effekt angesehen werden.

Im Übrigen ist festzuhalten, dass eine nach dem heutigen Stand der Technik leistungsfähige Masse in Beton eine Versagenslast F von mindestens 75 kN und in Vollziegel von mindestens 25 kN erreichen sollte, bei Streuungen von < 7,5%. Dieses Ziel wird aber nur mit der erfindungsgemäßen Zweikomponenten-Mörtelmasse erreicht.

## Patentansprüche

1. Zweikomponenten-Mörtelmasse mit
- einer härtbaren Harzkomponente enthaltend mindestens ein radikalisch polymerisierbares Harz, 5 bis 35 Gew.-% einer Reaktivverdünner-Mischung aus mindestens einem Hydroxyalkyl(meth)acrylat und mindestens einem Acetacetoxyalkyl(meth)acrylat in einem Gewichtsverhältnis von 1,5:1 bis 5,2:1, Füllstoffe, Lösungsmittel und Beschleuniger
- sowie einer davon reaktionsinhibierend getrennt angeordneten Härterkomponente.

2. Zweikomponenten-Mörtelmasse nach Anspruch 1, **dadurch gekennzeichnet, dass** sie als Hydroxyalkyl(meth)acrylat mindestens einen Vertreter der Hydroxyethylmethacrylat und Hydroxypropylmethacrylat umfassenden Gruppe enthält.

3. Zweikomponenten-Mörtelmasse nach mindestens einem der Ansprüche 1 oder 2, **dadurch gekennzeichnet, dass** sie als Acetacetoxyalkyl(meth)acrylat mindestens einen Vertreter der Acetacetoxyethyl-methacrylat und Acetacetoxypropylmethacrylat umfassenden Gruppe enthält.

4. Zweikomponenten-Mörtelmasse nach mindestens einem der Ansprüche 1 bis 3, **dadurch gekennzeichnet, dass** sie als radikalisch polymerisierbares Harz mindestens einen Vertreter der ungesättigte Polyesterharze, Vinylesterharze und Vinylesterurethanharze umfassenden Gruppe enthält.

5. Zweikomponenten-Mörtelmasse nach Anspruch 4, **dadurch gekennzeichnet, dass** sie als Vinylesterurethanharz ein Urethandimethacrylat-Polymer und/oder als ungesättigtes Polyesterharz ein ungesättigtes Polyesterharz auf Basis von o- und/oder iso-Phthalsäure, Maleinsäure oder Fumarsäure als Dicarbonsäure und niedrigmolekularen aliphatischen Polyolen, vorzugsweise Diolen enthält.

6. Zweikomponenten-Mörtelmasse nach mindestens einem der vorhergehenden Ansprüche, **dadurch gekennzeichnet, dass** sie zusätzlich einen difunktionellen Reaktivverdünner enthält.

7. Zweikomponenten-Mörtelmasse nach Anspruch 6, **dadurch gekennzeichnet, dass** sie als difunktionellen Reaktivverdünner Butandioldimethacrylat, Ethylenglykoldimethacrylat, Diethylenglykoldimethacrylat und/oder Triethylenglykoldimethacrylat, enthält.

8. Zweikomponenten-Mörtelmasse nach mindestens einem der vorhergehenden Ansprüche, **dadurch gekennzeichnet, dass** sie Quarz, pyrogene Kieselsäure, Glas, Korund, Porzellan, Steingut, Schwerspat, Leichtspat, Talkum und/oder Kreide als Füllstoff enthält.

9. Zweikomponenten-Mörtelmasse nach mindestens einem der vorhergehenden Ansprüche, **dadurch gekennzeichnet, dass** sie ein aromatisches Amin, ein Toluidin oder Xylidin und/oder ein Co-, Mn-, Sn- oder Ce-Salz als Beschleuniger enthält.

10. Zweikomponenten-Mörtelmasse nach Anspruch 9, **dadurch gekennzeichnet, dass** sie als Beschleuniger N,N-Dimethylanilin, N,N-Diethylanilin, N,N-Diisopropyliden-p-toluidin, N,N-Dimethyl-p-toluidin, N,N-Diisopropylol-p-toluidin, N,N-Diethylol-p-toluidin, N-Bis(2-hydroxyethyl)-xylidin, Cobaltoctoat und/oder Cobaltnaphthenat enthält.

11. Zweikomponenten-Mörtelmasse nach mindestens einem der vorhergehenden Ansprüche, **dadurch gekennzeichnet, dass** sie Benzoylperoxid, Methylethylketonperoxid, tert.-Butylperbenzoat, Cyclohexanonperoxid, Lauroylperoxid, Cumolhydroperoxid und/oder tert.-Butylperoxy-2-ethylhexanoat als Härter enthält.

12. Zweikomponenten-Mörtelmasse nach Anspruch 11, **dadurch gekennzeichnet, dass** sie den Härter in einer Menge von 0,5 bis 10 Gew.-%, vorzugsweise von 3 bis 8 Gew.-%, bezogen auf das radikalisch polymerisierbare Harz enthält.

13. Zweikomponenten-Mörtelmasse nach mindestens einem der vorhergehenden Ansprüche, **dadurch gekennzeichnet, dass** sie als weitere Mörtelbestandteile Wasser in der Härterkomponente und/oder tert.-Butylbrenzcatechin und/oder 4-Hydroxy-2,2,6,6-tetramethylpiperidinyl-1-oxid als Polymerisationsinhibitor in der Harzkomponente enthält.

14. Verwendung der Zweikomponenten-Mörtelmasse nach mindestens einem der vorhergehenden Ansprüche zur Befestigung von Verankerungsmitteln in Bohrlöchern in mineralischen Untergründen durch chemische Reaktion der Komponenten.

## Claims

1. Two-component mortar mass with
- a hardenable resin component containing at least one radically polymerisable resin, 5 to 35% by weight of a reactive thinner mixture made of at least one hydroxyalkyl (meth)acrylate and at least one acetacetoxyalkyl (meth)acrylate in a weight ratio from 1.5:1 to 5.2:1, fillers, solvents and accelerators
- as well as a hardener component arranged so that is separated from it in a way that inhibits reaction.

2. Two-component mortar mass according to claim 1, **characterised in that** it contains at least one representative of the group comprising hydroxyethyl methacrylate and hydroxypropyl methacrylate as hydroxyalkyl (meth)acrylate.

3. Two-component mortar mass according to at least one of claims 1 or 2, **characterised in that** it contains at least one representative of the group comprising acetacetoxyethyl methacrylate and acetacetoxypropyl methacrylate as acetacetoxyalkyl (meth)acrylate.

4. Two-component mortar mass according to at least one of claims 1 to 3, **characterised in that** it contains at least one representative of the group comprising unsaturated polyester resins, vinyl ester resins and vinyl ester urethane resins as radically polymerisable resin.

5. Two-component mortar mass according to claim 4, **characterised in that** it contains a urethane dimethacrylate polymer as vinyl ester urethane resin and/or an unsaturated polyester resin based on o- and/or iso-phthalic acid, maleic acid or fumaric acid as dicarboxylic acid and low molecular weight aliphatic polyols, preferably diols, as unsaturated polyester resin.

6. Two-component mortar mass according to at least one of the previous claims, **characterised in that** it also contains a difunctional reactive thinner.

7. Two-component mortar mass according to claim 6, **characterised in that** it contains butanediol dimethacrylate, ethylene glycol dimethacrylate, diethylene glycol dimethacrylate and/or triethylene glycol dimethacrylate as difunctional reactive thinner.

8. Two-component mortar mass according to at least one of the previous claims, **characterised in that** it contains quarz, pyrogenic silica, glass, corundum, porcelain, stoneware, heavy spar, light spar, talcum and/or chalk as filler.

9. Two-component mortar mass according to at least one of the previous claims, **characterised in that** it contains an aromatic amine, a toluidine or xylidine and/or a Co, Mn, Sn or Ce salt as accelerator.

10. Two-component mortar mass according to claim 9, **characterised in that** it contains N,N-dimethylaniline, N,N-diethylaniline, N,N-diisopropylidene-p-toluidine, N,N-dimethyl-p-toluidine, N,N-diisopropylol-p-toluidine, N,N-diethylol-p-toluidine, N-Bis(2-hydroxyethyl)-xylidine, cobalt octoate and/or cobalt naphthenate as accelerator.

11. Two-component mortar mass according to at least one of the previous claims, **characterised in that** it contains benzoyl peroxide, methyl ethyl ketone peroxide, tert.-butyl perbenzoate, cyclohexanone peroxide, lauroyl peroxide, cumene hydroperoxide and/or tert.-butylperoxy-2-ethylhexanoate as hardener.

12. Two-component mortar mass according to claim 11, **characterised in that** it contains the hardener in an amount from 0.5 to 10% by weight, preferably from 3 to 8% by weight, with reference to the radically polymerisable resin.

13. Two-component mortar mass according to at least one of the previous claims, **characterised in that** it contains water in the hardener component and/or tert.-butylbrenzcatechin and/or 4-hydroxy-2,2,6,6-tetramethylpiperidinyl-1-oxide as polymerisation inhibitor in the resin component as further mortar components.

14. Use of the two-component mortar mass according to at least one of the previous claims for fastening means of anchoring in boreholes in mineral substrates through the chemical reaction of the components.

## Revendications

1. Composition de mortier à deux composants comportant :
- un composant de résine durcissable contenant au moins une résine polymérisable par voie radicalaire, 5 à 35 % en poids d'un mélange de diluants réactifs formé d'au moins un (méth)acrylate d'hydroxyalkyle et d'au moins un (méth)acrylate d'acétacétoxyalkyle dans un rapport de poids de 1,5:1 à 5,2:1, des charges, des solvants et des accélérateurs,
- ainsi qu'un composant durcisseur séparé inhibiteur de réaction.

2. Composition de mortier à deux composants selon la revendication 1, **caractérisée en ce qu'**elle contient, en tant que (méth)acrylate d'hydroxyalkyle, au moins un représentant du groupe comportant le méthacrylate d'hydroxyéthyle et le méthacrylate d'hydroxypropyle.

3. Composition de mortier à deux composants selon au moins une des revendications 1 ou 2, **caractérisée en ce qu'**elle contient, en tant que (méth)acrylate d'acétacétoxyalkyle, au moins un représentant du groupe comportant le méthacrylate d'acétacétoxyéthyle et le méthacrylate d'acétacétoxypropyle.

4. Composition de mortier à deux composants selon au moins une des revendications 1 à 3, **caractérisée en ce qu'**elle contient, en tant que résine polymérisable par voie radicalaire, au moins un représentant du groupe comportant des résines de polyester insaturées, des résines d'ester vinylique et des résines d'ester vinylique d'uréthanne.

5. Composition de mortier à deux composants selon la revendication 4, **caractérisée en ce qu'**elle contient, en tant que résine d'ester vinylique d'uréthanne, un polymère de diméthacrylate d'uréthanne et/ou en tant que résine de polyester insaturée une résine de polyester insaturée à base d'acide o- et/ou iso-phtalique, d'acide maléique ou d'acide fumarique en tant qu'acide dicarboxylique et des polyols aliphatiques à faible poids moléculaire, de préférence des diols.

6. Composition de mortier à deux composants selon au moins une des revendications précédentes, **caractérisée en ce qu'**elle contient en plus un diluant réactif difonctionnel.

7. Composition de mortier à deux composants selon la revendication 6, **caractérisée en ce qu'**elle contient, en tant que diluant réactif difonctionnel, du diméthacrylate de butanediol, du diméthacrylate d'éthylène glycol, du diméthacrylate de diéthylène glycol et/ou du diméthacrylate de triéthylène glycol.

8. Composition de mortier à deux composants selon au moins une des revendications précédentes, **caractérisée en ce qu'**elle contient, en tant que charge, du quartz, de l'acide silicique pyrogène, du verre, du corindon, de la porcelaine, de la faïence, de la barytine, du blanc de gypse, du talc et/ou de la craie.

9. Composition de mortier à deux composants selon au moins une des revendications précédentes, **caractérisée en ce qu'**elle contient, en tant qu'accélérateur, une amine aromatique, une toluidine ou une xylidine et/ou un sel de Co, Mn, Sn ou Ce.

10. Composition de mortier à deux composants selon la revendication 9, **caractérisée en ce qu'**elle contient, en tant qu'accélérateur, de la N,N-diméthylaniline, de la N,N-diéthylaline, de la N,N-diisopropylidèn-p-toluidine, de la N,N-diméthyl-p-toluidine, de la N,N-diisopropylol-p-toluidine, de la N,N-diéthylol-p-toluidine, de la N-bis(2-hydroxyéthyl)-xylidine, un octoate de cobalt et/ou un naphténate de cobalt.

11. Composition de mortier à deux composants selon au moins une des revendications précédentes, **caractérisée en ce qu'**elle contient, en tant que durcisseur, un péroxyde de benzoyle, un péroxyde de méthyléthylcétone, un perbenzoate de butyle tertiaire, un péroxyde de cyclohexanone, un péroxyde de lauroyle, un hydropéroxyde de cumyle et/ou un hexanoate de butylpéroxy-2-éthyle tertiaire.

12. Composition de mortier à deux composants selon la revendication 11, **caractérisée en ce qu'**elle contient ledit durcisseur en une quantité de 0,5 à 10 % en poids, de préférence de 3 à 8 % en poids, sur la base de la résine polymérisable par voie radicalaire.

13. Composition de mortier à deux composants selon au moins une des revendications précédentes, **caractérisée en ce qu'**elle contient, en tant que composants de mortier supplémentaires, de l'eau dans le composant durcisseur et/ou un catéchol de butyle tertiaire et/ou un oxyde de 4-hydroxy-2,2,6,6-tétraméthylpipéridinyl-1 en tant qu'inhibiteur de polymérisation dans le composant de résine.

14. Utilisation de la composition de mortier à deux composants selon au moins une des revendications précédentes pour fixer des moyens d'ancrage dans des trous de perçage dans des substrats minéraux par réaction chimique des composants.
